# DEMANDE DE BREVET EUROPEEN

(11) **EP 0 737 841 A1**
(43) Date de publication de la demande: **16.10.1996**
(21) Numéro de dépôt: 96400741.3
(22) Date de dépôt: 05.04.1996
(51) Int. Cl.: F41H 11/02, B64C 39/02

(54) **Procédé et dispositif d'essaimage de drones sur des trajectoires courbes autour d'un ou plusieurs points de référence**

(30) Priorité: 13.04.1995 FR 9504457
(71) Demandeur: THOMSON-CSF, 75008 Paris (FR)
(72) Inventeur: Fesland, Sylvain, 92402 Courbevoie Cedex (FR); Nigron, Pascal, 92402 Courbevoie Cedex (FR)
(74) Mandataire: Beylot, Jacques

(57) **Abrégé**

L'invention est relative au déploiement et à l'entretien d'une ceinture de drones autonomes (2) équipés de senseurs d'alerte pour assurer la surveillance de l'environnement d'un ou plusieurs points sensibles (1). Elle concerne notamment les systèmes d'alerte antimissiles et antiaéronefs basse et très basse altitude pour des bâtiments de surface de la marine. Elle consiste à contrôler les trajectoires des drones uniquement au moyen de leur rayon de courbure pour lequel ils reçoivent une consigne depuis le ou les points de référence (1) codée par une fréquence d'un signal radioélectrique sensible à l'effet Doppler. Une modification de cette consigne de rayon de courbure en fonction du signal d'un capteur de proximité permet d'éviter tous problèmes de collision et de maintenir chaque drone à égale distance l'un de l'autre. Ce mode de contrôle s'avère particulièrement efficace tout en étant d'une grande simplicité.

## Description

La présente invention est relative au déploiement et à l'entretien d'une ceinture de drones autonomes équipés de senseurs d'alerte pour assurer la surveillance de l'environnement d'un ou plusieurs points sensibles. Elle concerne notamment les systèmes d'alerte antimissiles et antiaéronefs basse et très basse altitude pour des bâtiments de surface de la marine.

La détection de missiles ou d'aéronefs volant à basse ou très basse altitude par les moyens du bord d'un navire ne peut être envisagée qu'à une distance maximale comprise entre 10 et 15 km en raison de contraintes d'environnement telles que la rotondité de la terre, le clutter de mer et l'effet image. Cette détection tardive limite le temps de réaction de la défense antiaérienne et ampute d'autant la survie du navire.

L'alerte précoce doit donc être fournie par des moyens externes au navire. Les solutions actuellement opérationnelles dans les marines sont constituées d'avions de guet avancé dont l'utilisation n'est envisageable que près des côtes amies ou par une force navale comportant un porte-avions.

Une solution à l'aide de drones qui sont des avions sans pilote radiocommandés de petite taille encore appelés UAV (Unmanned Aerial Vehicle en langue anglo-saxonne) pourrait être envisagée car ceux-ci ont l'avantage d'être utilisables par des bateaux autres que des porte-avions. Cependant, ils ont une faible charge utile, de l'ordre d'une quarantaine de kilogrammes, qui limite la portée du senseur d'alerte et des instruments pouvant être embarqués et qui fait qu'un système d'alerte antimissile ou antiaéronef omnidirectionnel devra comporter un nombre important de drones, plusieurs dizaines tournant autour du navire à protéger.

Il se pose alors le problème de contrôler les trajectoires des drones depuis le navire protégé pendant leurs déploiements, leurs fonctionnements et leurs récupérations. Un système de radioguidage tenant compte des positions relatives instantanées des drones par rapport au navire protégé s'avère lourd à gérer car il doit assurer à la fois le contrôle des plans de vol pour éviter les collisions des drones et une répartition des drones autour du navire protégé tenant compte des performances des senseurs d'alerte qui peuvent varier en fonction des conditions locales de fonctionnement (pluie, brouillard, relief,...).

L'invention a pour but de simplifier le plus possible le contrôle des trajectoires de drones à partir d'un ou plusieurs points lentement mobiles.

Elle a pour objet un procédé d'essaimage de drones sur des trajectoires courbes autour d'un ou plusieurs points de référence consistant à équiper chaque point de référence d'un émetteur de radiocommande accordé sur une fréquence particulière ajustable, représentative d'une consigne de rayon de courbure de trajectoire augmentant et diminuant avec la fréquence émise, et à équiper chaque drone d'une part de récepteurs de radiocommande, en nombre au moins égal à celui des émetteurs de radiocommande des points de référence accordés chacun sur la fréquence d'émission de l'un desdits émetteurs et pourvus de circuits de détection de fréquence décodant les consignes de rayon de courbure émises à partir des différentes fréquences apparentes reçues provenant des émetteurs des différents points de référence, d'un circuit de pondération pondérant les consignes de rayon de courbures reçues des différents circuits de détection de fréquence des récepteurs de radiocommande et d'un circuit d'actionnement de gouverne de direction mettant en oeuvre la consigne pondérée de rayon de courbure délivrée par le circuit de pondération.

L'effet Doppler qui augmente la fréquence de l'onde reçue lorsque l'émetteur se rapproche du récepteur et la diminue lorsque l'émetteur s'éloigne du récepteur provoque une variation apparente des consignes de rayon de courbure qui a tendance à augmenter le rayon de courbure de la trajectoire d'un drone lorsqu'un émetteur s'en rapproche et à diminuer le rayon de courbure de la trajectoire d'un drone lorsqu'un émetteur s'en éloigne et qui concourt ainsi à maintenir l'émetteur au centre de la trajectoire d'un drone

Les risques de collisions entre drones peuvent être évités en répartissant les drones sur différents niveaux d'altitude, tandis que leur distribution régulière sur des trajectoires courbes autour des points de référence peut être obtenue par un déploiement progressif. Cependant, en raison des différences de vitesse et de trajectoire inévitables entre drones, la distribution des drones autour des points de référence a tendance à perdre sa régularité à plus ou moins long terme.

Pour résoudre ce problème ainsi que pour éviter les collisions entre drones volant à la même altitude, le procédé d'essaimage de drones précédent est avantageusement compléter en équipant les drones de senseurs de proximité modifiant la consigne de rayon de courbure de leur trajectoire de manière à les éloigner dés que leur senseur de proximité détecte un trop grand rapprochement avec un autre drone.

Pour éviter les problèmes de trous dans la couverture de surveillance, les drones sont avantageusement équipés de senseurs de proximité modifiant la consigne de rayon de courbure de leur trajectoire non seulement de manière à les éloigner dès que leur senseur de proximité détecte un trop grand rapprochement avec un autre drone mais également de manière à les rapprocher lorsque leur senseur de proximité détecte un trop grand éloignement avec le drone le plus proche.

Avantageusement, chaque drone est équipé, à l'arrière, d'un senseur de proximité de manière à détecter s'il est suivi de trop près ou de trop loin par un autre drone, ledit senseur de proximité engendrant un ordre de diminution de rayon de courbure de la trajectoire du drone qu'il équipe dans le cas d'une détection de trop grande proximité d'un autre drone ou un ordre d'augmentation de rayon de courbure de la trajectoire du drone dans le cas d'une détection d'un trop grand éloignement du drone le plus proche.

Ainsi, un drone suivi de trop près par un autre drone sur sa trajectoire autour d'un ou plusieurs points de référence se rapproche des points de référence pour augmenter sa vitesse angulaire sur sa trajectoire courbe et s'éloigner de l'autre drone. Inversement, s'il est suivi de trop loin par le drone le plus proche, il s'éloigne des points de référence pour diminuer sa vitesse angulaire sur sa trajectoire courbe et se laisser rattraper.

La présente invention a également pour objet un dispositif de mise en oeuvre du procédé précité d'essaimage de drones sur des trajectoires courbes autour d'un ou plusieurs points de référence comportant :
- à chaque point de référence :
   - un émetteur de radiocommande accordé sur une fréquence particulière ajustable, représentative d'une consigne de rayon de courbure de trajectoire augmentant et diminuant avec la fréquence émise,
- sur chaque drone :
   - de récepteurs de radiocommande, en nombre égal à celui des émetteurs de radiocommande des points de référence, accordés chacun sur la fréquence d'émission de l'un desdits émetteurs et pourvus de circuits de détection de fréquence décodant les consignes de rayon de courbure émises à partir des fréquences apparentes reçues provenant des émetteurs des différents points de référence,
   - un circuit de pondération pondérant les consignes de rayon de courbures reçues des différents circuits de détection de fréquence, et
   - un circuit d'actionnement de gouverne de direction mettant en oeuvre la consigne pondérée de rayon de courbure délivrée par le circuit de pondération.

Avantageusement, pour permettre de répartir les drones autour des points de référence et d'éviter les collisions entre drones volant à la même altitude, le dispositif de mise en oeuvre du procédé d'essaimage comporte en outre sur chaque drone un senseur de proximité modifiant la consigne pondérée de rayon de courbure du drone qu'il équipe en introduisant en entrée du circuit de pondération une consigne de modification du rayon de courbure dans un sens tendant à éloigner le drone qu'il équipe d'un autre drone trop proche ou à rapprocher le drone qu'il équipe d'un autre drone trop éloigné.

Avantageusement, le senseur de proximité équipant chaque drone est monté à l'arrière de chaque drone de manière à détecter si un drone est suivi de trop près ou de trop loin par un autre drone et engendre soit un ordre de diminution du rayon de courbure de la trajectoire du drone qu'il équipe chaque fois qu'il détecte la trop grande proximité d'un autre drone, soit un ordre d'augmentation du rayon de courbure de la trajectoire du drone qu'il équipe chaque fois qu'il détecte un trop grand éloignement du drone qui le suit.

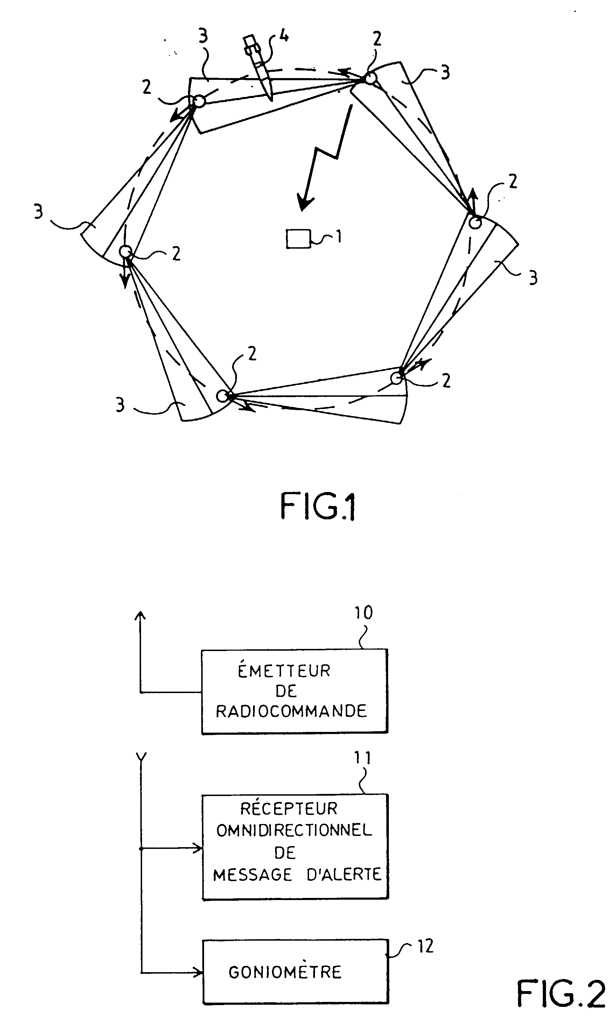

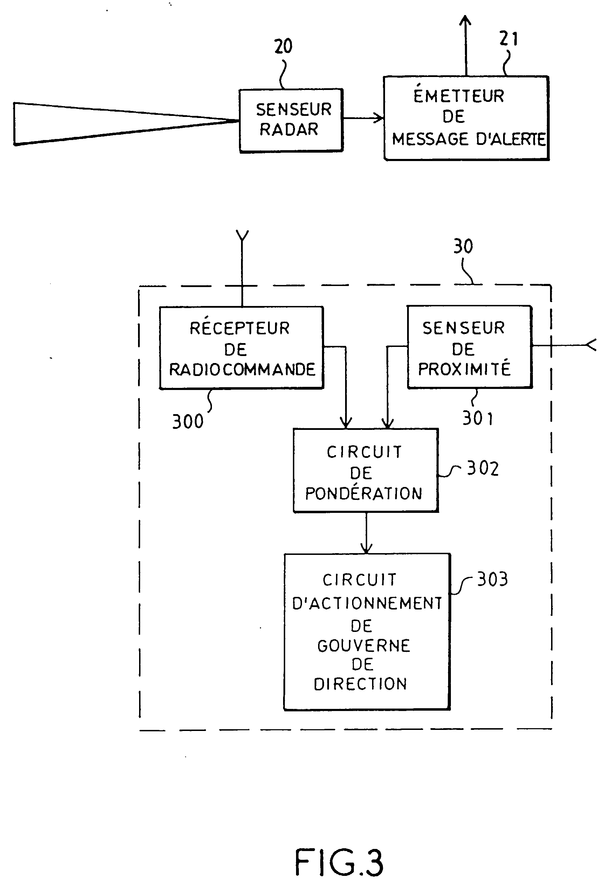

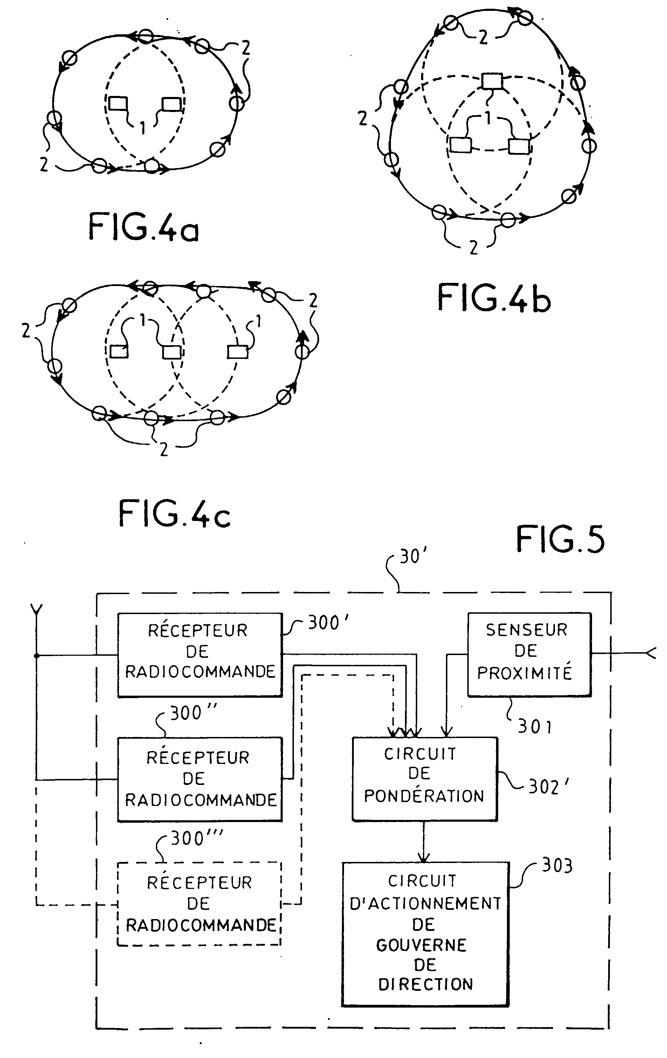

D'autres caractéristiques et avantages ressortiront de la description qui va suivre d'un mode de réalisation donné à titre d'exemple. Cette description sera faite en regard du dessin dans lequel :
- une figure 1 représente un système de guet avancé pour navire à l'aide de drones mis en cercles autour du navire grâce au procédé d'essaimage selon l'invention ;
- une figure 2 est un schéma synoptique de l'équipement d'un navire pour les liaisons avec les drones ;
- une figure 3 est un schéma synoptique de l'équipement d'un drone ;
- des figures 4a, 4b et 4c représentent des système de guet avancé pour une flottille de navires ayant diverses dispositions, à l'aide de drones patrouillant autour de la flottille ; et
- une figure 5 est un schéma synoptique d'un équipement de navigation autonome pour drone adapté à une commande par une flottille de navires.

La figure 1 montre un système de guet avancé pour navire 1 constitué de six drones 2 patrouillant en cercle à la même vitesse autour du navire 1 à une distance de l'ordre de 25 à 30 km. Les drones 2 sont régulièrement répartis autour du navire 1 et sont équipés d'un radar de pointe avant illuminant un secteur 3 couvrant une zone s'étendant sur une distance de l'ordre de 30 km afin de réaliser une couverture sans trou et de détecter toute menace 4 d'où qu'elle vienne. La gestion des trajectoires des drones 2 est réalisée de manière autonome. Le navire 1 règle uniquement le rayon de la ceinture de déploiement des drones tandis que chaque drone se positionne individuellement sur sa trajectoire relativement au drone qui le suit et au navire.

Le navire est équipé, comme le montre la figure 2, d'un émetteur de radiocommande 10 et d'un récepteur omnidirectionnel de message d'alerte 11 associé à des moyens 12 de détermination de la direction de provenance des messages d'alerte.

L'émetteur de radiocommande 10 est accordé sur une fréquence particulière ajustable, représentative d'une consigne de rayon de courbure de trajectoire augmentant et diminuant avec la fréquence émise. Accessoirement, il est capable d'émettre un message individualisé ou non de désactivation des drones.

Le récepteur omnidirectionnel de message d'alerte 11 est capable de recevoir à tout instant des messages d'alerte en provenance des drones patrouillant autour du navire.

Les moyens 12 de détermination de la direction de provenance des messages d'alertes peuvent être de type radiogoniométrique ou basés sur le repérage de la direction instantanée de l'antenne de réception du récepteur omnidirectionnel de message d'alerte 11 lorsque celle-ci est directive et tournante.

Les drones volent à une vitesse et une altitude constantes sur des trajectoires courbes autour du navire. Ils peuvent effectuer des manoeuvres dans le plan horizontal grâce à une gouverne de direction. Chacun d'eux est équipé, comme le montre la figure 3, d'un senseur radar 20 de pointe avant à couverture sectorielle capable de détecter une menace au devant de lui, d'un émetteur 21 de message d'alerte à antenne latérale, orientée latéralement en direction du navire et d'un système autonome de navigation 30.

Le senseur radar 20 déclenche l'émetteur de message d'alerte 21 dés qu'il détecte une menace. Le message d'alerte émis en direction du navire 1 est reçu par le récepteur omnidirectionnel de message d'alerte 11 du navire 1. Ce dernier, en association avec les moyens 12 de détermination de direction, détermine la direction de provenance du message d'alerte et avise le centre de commandement du navire 1 de la menace et de sa direction afin que des mesures de protection appropriées soient prises.

Le système autonome de navigation 30 d'un drone comporte, comme le montre la figure 3, un récepteur de radiocommande 300, un senseur de proximité 301, un circuit de pondération de consignes 302 et un circuit 303 d'actionnement de gouverne de direction du drone.

Le récepteur de radiocommande 300 est accordé sur la fréquence d'émission de l'émetteur de radiocommande 10 du navire 1 et pourvu d'un circuit de détection de la fréquence apparente d'émission de l'émetteur de radiocommande 10 du navire 1 qui engendre une consigne de rayon de courbure pour la trajectoire du drone déduite de la fréquence apparente d'émission de l'émetteur 10 du navire 1. Il comporte en outre un circuit de détection d'ordre de désactivation.

Le senseur de proximité 301 est monté à l'arrière de la plate-forme d'un drone, et sensible à la fréquence d'émission du senseur radar 20 d'un autre drone. Il possède deux seuils de sensibilité étagés. Un seuil haut qui est dépassé lorsque le signal capté en provenance d'un senseur radar d'un autre drone est trop puissant et atteste de la trop grande proximité de cet autre drone et un seuil bas en dessous duquel le signal capté en provenance du senseur radar d'un autre drone est trop faible et atteste du trop grand éloignement de cet autre drone. Lorsqu'il est illuminé par une onde radar de puissance supérieure à son seuil haut, il engendre une consigne de diminution du rayon de courbure de la trajectoire du drone tandis que lorsqu'il n'est pas illuminé par une onde radar ou illuminé par une onde radar de puissance inférieure à son seuil bas, il engendre une consigne d'augmentation du rayon de courbure de la trajectoire du drone.

Le circuit 302 de pondération des consignes de rayon de courbure reçoit d'une part, la consigne de rayon de courbure engendrée par le circuit de détection de fréquence du récepteur de radiocommande 300 et, d'autre part, une éventuelle consigne de diminution ou d'augmentation de rayon de courbure engendrée par le senseur de proximité 301 et délivre une consigne pondérée de rayon de courbure utilisée par le circuit 303 d'actionnement de gouverne de direction du drone.

L'essaimage des drones s'effectue de la manière suivante :

Le navire 1 active son émetteur de radiocommande 10 sur une fréquence d'émission correspondant au rayon de courbure désiré pour la trajectoire des drones, c'est à dire à la distance à laquelle on désire voir tourner les drones.

Les drones sont ensuite lancés un à un à intervalles réguliers.

Lors de son lancement, un drone s'éloigne de moins en moins vite du navire car il reçoit une fréquence apparente de la part de l'émetteur de radiocommande du navire inférieure à la fréquence de consigne en raison de l'effet Doppler ce qui le conduit à adopter pour sa trajectoire un rayon de courbure inférieur à la valeur de consigne. Comme de ce fait, sa vitesse d'éloignement décroît, l'effet Doppler se fait de moins en moins sentir sur la consigne de rayon de courbure qui croît jusqu'à la valeur désirée. De la sorte, un drone décrit lors de son lancement une trajectoire en spirale qui se transforme progressivement en cercle.

Si, au cours de son cheminement, un drone s'aperçoit qu'il est suivi de trop près par un autre en raison du franchissement du seuil haut de sensibilité de son senseur de proximité, il réduit sa consigne de rayon de courbure pour augmenter sa vitesse angulaire sur sa trajectoire courbe autour du navire et échapper à son poursuivant.

Si, au contraire, un drone s'aperçoit que le drone qui le suit est trop éloigné en raison du non-franchissement du seuil bas de sensibilité de son senseur de proximité, il augmente sa consigne de rayon de courbure pour diminuer sa vitesse angulaire sur sa trajectoire courbe autour du navire et se laisser rattraper par son poursuivant.

On évite ainsi les risques de collision entre drones et les trous dans la couverture de surveillance qui sans cela pourraient subvenir de façon impromptue en raison de variations locales des conditions de propagation dues par exemple à des zones localisées de pluie ou de brouillard. En effet, l'arrivée d'un drone dans une zone de pluie ou de brouillard a pour conséquence immédiate une diminution du signal capté par son senseur de proximité (liée aux pertes atmosphériques). Le drone s'aperçoit donc que le drone qui le suit n'est plus à portée de son capteur en raison du non-franchissement du seuil bas de sensibilité et adapte sa consigne de rayon de courbure en conséquence.

Si, pour une raison ou une autre, déplacement du navire ou dérive du drone, ce dernier n'a plus le navire au centre de courbure de sa trajectoire, la distance du navire au drone varie soit en rapprochement, soit en éloignement. Dans le cas d'un rapprochement, il se manifeste un effet Doppler augmentant la fréquence apparente reçue par le drone en provenance de l'émetteur de radiocommande du navire. Cette augmentation de la fréquence apparente reçue de l'émetteur de radiocommande entraîne une augmentation corrélative de la consigne de rayon de courbure qui a tendance à ouvrir la trajectoire du drone et, par conséquent à l'éloigner du navire. Dans le cas d'un éloignement, il se manifeste un effet Doppler contraire diminuant la fréquence apparente reçue par le drone en provenance de l'émetteur de radiocommande du navire. Cette diminution de la fréquence apparente reçue de l'émetteur de radiocommande entraîne une diminution corrélative de la consigne de rayon de courbure qui a tendance à fermer davantage la trajectoire du drone et par conséquent à le rapprocher du navire.

De la sorte, un drone a tendance à toujours cercler autour du navire bien que celui-ci se déplace.

La consigne de rayon de courbure de la trajectoire des drones à partir de laquelle est déterminée la fréquence de fonctionnement de l'émetteur de radiocommande du navire est établie en fonction du nombre de drones à déployer et de la portée de leur senseur radar. Cette consigne augmente avec le nombre de drones.

Le système constitue une barrière de détection autonome et robuste ne nécessitant pas un moyen de contrôle complexe de trajectoires de la part du navire qui le déploie.

Pour la récupération des drones, on peut prévoir pour chacun d'eux un ordre individuel de récupération émis par le navire et reçu à bord de chaque drone par des moyens de réception adaptés qui provoquent une diminution progressive et importante du rayon de courbure pour ramener le drone à proximité du navire avant d'arrêter son système de propulsion.

Au lieu d'être déployés autour d'un seul navire, les drones peuvent l'être autour d'une flottille. La figure 4a montre une configuration à deux navires 1 et huit drones 2, la figure 4b une configuration triangulaire à trois navires 1 et neuf drones 2 et la figure 4c une configuration en ligne de trois navires 1 et dix drones 2. Pour ce faire chaque navire 1 est équipé d'un émetteur de radiocommande émettant dans une plage de fréquence particulière et chaque drone 2 est équipé d'un récepteur de radiocommande multiple qui est accordé sur les diverses plages de fréquence des émetteurs de radiocommande des navires 1 et qui délivre autant de consignes de rayons de courbure qu'il y a de navires 1 équipés d'émetteur de radiocommande. Ces différentes consignes de rayon de courbure sont appliquées, avec l'éventuelle consigne de modification de rayon de courbure issue du senseur de proximité, en entrée du circuit de pondération qui en déduit une unique consigne pondérée de rayon de courbure appliquée au circuit d'actionnement des gouvernes de direction. Etant donné que les navires de la flottille sont dispersés sur une certaine surface, ils ne peuvent plus être au centre de courbure de la trajectoire des drones de sorte que leurs distances aux drones varient ce qui entraîne pour les drones des modifications apparentes et contradictoires des consignes de rayons de courbure reçues des différents navires. Les conflits sont résolus par le circuit de pondération. Celui-ci peut être à logique floue et faire varier les coefficients de pondération en fonction des valeurs des consignes de rayon de courbure reçues. Il donne le plus d'importance aux consignes correspondant au plus grands rayons de courbure de manière à être sûr que la trajectoire des drones entoure l'ensemble de la flottille.

La figure 5 illustre le circuit 30' de navigation autonome d'un drone prévu pour fonctionner avec plusieurs émetteurs de radiocommande répartis sur plusieurs navires. Ce circuit se distingue de celui 30 de la figure 3 par le fait que le récepteur de radiocommande est multiple avec des étages parallèles 300', 300", 300"' accordés chacun sur la plage de fréquence d'un émetteur de radiocommande et délivrant chacun une consigne de rayon de courbure en entrée du circuit de pondération 302'.

Bien entendu, la présente invention n'est pas limitée à l'exemple de réalisation décrit mais est susceptible de nombreuses variantes accessibles à l'homme du métier sans que l'on s'écarte de l'esprit de l'invention. C'est ainsi qu'elle peut faire l'objet d'applications terrestres pour la surveillance avancée autour d'un ou plusieurs points lentement mobiles.

## Revendications

1. Procédé d'essaimage de drones (2) sur des trajectoires courbes autour d'un ou plusieurs points de référence caractérisé en ce qu'il consiste à équiper chaque point de référence (1) d'un émetteur de radiocommande (10) accordé sur une fréquence particulière ajustable, représentative d'une consigne de rayon de courbure de trajectoire augmentant et diminuant avec la fréquence émise, et à équiper chaque drone (2) d'une part de récepteurs de radiocommande (300',300", 300"'), en nombre au moins égal à celui des émetteurs de radiocommande (10) des points de référence (1), accordés chacun sur la fréquence d'émission de l'un desdits émetteurs (10) et pourvus de circuits de détection de fréquence décodant les consignes de rayon de courbure émises à partir des différentes fréquences apparentes reçues provenant des émetteurs (10) des différents points de référence (1), d'un circuit de pondération (302') pondérant les consignes de rayons de courbures reçues des différents circuits de détection de fréquence et d'un circuit (303) d'actionnement de gouverne de direction mettant en oeuvre la consigne pondérée de rayon de courbure délivrée par le circuit de pondération (302').

2. Procédé selon la revendication 1, caractérisé en ce qu'il consiste en outre à équiper les drones (2) de senseurs de proximité (301) agissant sur le circuit de pondération (302, 302') pour modifier la consigne pondérée de rayon de courbure de leur trajectoire de manière à les éloigner dés que leur senseur de proximité (301) détecte un trop grand rapprochement avec un autre drone (2).

3. Procédé selon la revendication 1, caractérisé en ce qu'il consiste en outre à équiper les drones (2) de senseurs de proximité (301) agissant sur le circuit de pondération (302, 302') pour modifier la consigne pondérée de rayon de courbure de leur trajectoire de manière à les rapprocher dès que le senseur de proximité (301) détecte un trop grand éloignement avec le drone (2) le plus proche.

4. Procédé selon la revendication 1, caractérisé en ce qu'il consiste en outre à équiper chaque drone (2), à l'arrière, d'un senseur de proximité (301) de manière à détecter s'il est suivi de trop près par un autre drone (2), ledit senseur de proximité (301) engendrant un ordre de diminution de rayon de courbure de la trajectoire du drone (2) qu'il équipe dans le cas d'une détection de trop grande proximité d'un autre drone (2).

5. Procédé selon la revendication 1, caractérisé en ce qu'il consiste en outre à équiper chaque drone (2), à l'arrière d'un senseur de proximité (301) de manière à détecter s'il est suivi de trop loin par un autre drone (2), ledit senseur de proximité (301) engendrant un ordre d'augmentation de rayon de courbure de la trajectoire du drone qu'il équipe dans le cas de la détection d'un trop grand éloignement d'un autre drone (2).

6. Dispositif d'essaimage de drones (2) sur des trajectoires courbes autour d'un ou plusieurs points de référence (1) comportant :
- à chaque point de référence (1) :
• un émetteur de radiocommande (10) accordé sur une fréquence particulière ajustable, représentative d'une consigne de rayon de courbure de trajectoire augmentant et diminuant avec la fréquence émise,
- sur chaque drone (2) :
• de récepteurs de radiocommande (300', 300", 300"') en nombre égal à celui des émetteurs de radiocommande (10) des points de référence (1) accordés chacun sur la fréquence d'émission de l'un desdits émetteurs (10) et pourvus de circuits de détection de fréquence décodant les consignes de rayon de courbure émises à partir des fréquences apparentes reçues provenant des émetteurs (10) des différents points de référence (1 ),
• un circuit de pondération (302') pondérant les consignes de rayon de courbures reçues des différents circuits de détection de fréquence, et
• un circuit (303) d'actionnement de gouverne de direction mettant en oeuvre la consigne pondérée de rayon de courbure délivrée par le circuit de pondération (302').

7. Dispositif selon la revendication 6, caractérisé en ce que chaque drone (2) comporte en outre un senseur de proximité (301) engendrant à destination du circuit de pondération (302'), des ordres de modification de la consigne pondérée de rayon de courbure pour tenir compte des évolutions d'autres drones (2) à proximité.

8. Dispositif selon la revendication 7, caractérisé en ce que lesdits senseurs de proximité (301) ont un seuil haut de sensibilité dont le dépassement signale une trop grande proximité d'un autre drone (2) et provoque la délivrance d'un ordre de modification du rayon de courbure de la trajectoire du drone (2) porteur dudit senseur de proximité (301) en vue d'agir sur la vitesse angulaire du drone (2) porteur pour l'éloigner de l'autre drone (2).

9. Dispositif selon la revendication 7, caractérisé en ce que lesdits senseurs de proximité (301) ont un seuil bas de sensibilité dont le non-dépassement signale un trop grand éloignement avec un autre drone (2) et provoque la délivrance d'un ordre de modification du rayon de courbure de la trajectoire du drone (2) porteur dudit senseur de proximité (301) en vue d'agir sur la vitesse angulaire du drone (2) porteur pour le rapprocher de l'autre drone (2).

10. Dispositif selon la revendication 7, caractérisé en ce que ledit circuit de pondération (302') est à logique floue.
